# EUROPÄISCHE PATENTSCHRIFT

(11) **EP 1 584 631 B1**
(45) Veröffentlichungstag und Bekanntmachung des Hinweises auf die Patenterteilung: **12.11.2008**
(21) Anmeldenummer: 05007009.3
(22) Anmeldetag: 31.03.2005
(51) Int. Cl.: C08F 2/10, C08F 291/00, C08J 3/07, C08L 51/00, C08L 67/03

(54) **Copolymerisierbare Polyalkylenglykol-Makromonomere, deren Herstellung und Verwendung**
Copolymerizable polyethylenglycol macromonomers, their preparation and use
Macromonomères polyéthylène glycol copolymérisables, leur préparation et leur utilisation

(30) Priorität: 07.04.2004 DE 102004017097
(43) Veröffentlichungstag der Anmeldung: 12.10.2005
(73) Patentinhaber: Clariant Produkte (Deutschland) GmbH, 65929 Frankfurt am Main (DE)
(72) Erfinder: Pöllmann, Klaus, Dr., 84489 Burghausen (DE); Czernin, Jutta, 84508 Burgkirchen (DE); Kapfinger, Josef, Zell 84326 Falkenberg (DE)

(56) Entgegenhaltungen:
- EP-A- 1 371 667
- US-A- 5 451 641
- US-A- 5 486 587
- US-A1- 2002 045 689

## Beschreibung

Die vorliegende Erfindung betrifft die Herstellung von Ω-(Dimethyl-isopropenyl-benzyl-urethan)-Polyalkylenglykolen mit α-Alkoxy- oder α-Dihydroxygruppen und deren Anwendung als hydrolysestabile Makromonomere zur Dispergierung und Vernetzung von Polymeren.

Polyalkylenglykole werden im Allgemeinen durch anionische, ringöffnende Polymerisation von Epoxiden (Ethylenoxid, Propylenoxid, Butylenoxid) mit Alkoholen als Initiatoren gemäß folgender Reaktionsgleichung hergestellt (siehe Ullmann Encyclopedia of Industrial Chemistry 5. ed VCH, ISBN 3-527-20100-9). Mit R'-OH = Methanol entstehen so α-Methoxy-Ω-hydroxy-Polyalkylenglykole

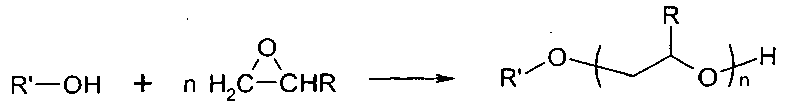

Polyalkylenglykolmakromonomere sind solche Polyalkylenglykole, die zusätzlich zur Polyetherkette eine reaktive, copolymerisierbare Enddoppelbindung enthalten. Sie sind zur Herstellung von so genannten Kammpolymeren mit Polyalkylenglykolseitengruppen für eine Vielzahl von Anwendungen interessant. Zur Herstellung dieser Polyalkylenglykolmakromonomere mit Enddoppelbindung werden nach WO 00/012 577 α-Alkoxy-Ω-hydroxy-Polyalkylenglykole durch Veresterung mit Acrylsäure, Methacrylsäure oder anderen ungesättigten Carbonsäuren in den entsprechenden α-Alkoxy-Polyalkylenglykolester überführt, der dann mit anderen Monomeren copolymerisiert werden kann.

Nachteilig dabei ist die Tatsache, dass sowohl das α-Alkoxy-Polyalkylen-glykolester-Makromonomer als auch das bei einer Copolymerisation solcher Verbindungen resultierende Kammpolymer während der Lagerung zur Hydrolyse des Esters und damit zur Abspaltung der α-Alkoxy-Polyalkylenglykolseitengruppe neigt. Darüber hinaus neigen die α-Alkoxy-Polyalkylenglykolester der Acryl- und Methacrylsäure zur Homopolymerisation, was die Herstellung und Lagerung der Ester schwierig und nur in Gegenwart von Polymerisationsinhibitoren möglich macht.

Auch für die Herstellung sowie die nachträgliche Vernetzung von wässrigen Polyurethandispersionen sind radikalisch copolymerisierbare Polyalkylenglykol-Makromonomere von großem Interesse. Für diese Anwendung müssen die Polyalkylenglykol-Makromonomere jedoch zusätzlich zur radikalisch copolymerisierbaren, ungesättigten Gruppe mindestens eine freie Hydroxy- oder primäre Aminogruppe enthalten, die einen Einbau in die Polyurethandispersion erlaubt.

Aufgabe der vorliegende Erfindung war es deshalb ein radikalisch copolymerisierbares Polyalkylenglykol-Makromonomer zur Verfügung zu stellen, das im Vergleich zu α-Alkoxy-Polyalkylenglykolester von ungesättigten Carbonsäuren deutlich hydrolysestabiler ist, ausreichend gute Copolymerisationseigenschaften aufweist, und gegebenenfalls vor der radikalischen Copolymerisation in ein Additionspolymer, wie beispielsweise Polyurethan eingebaut werden kann.

Gegenstand der Erfindung sind somit Verbindungen der Formel 1 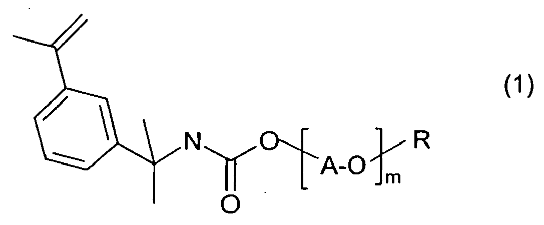 worin
- A: C₂-C₄-Alkylen
- m: eine ganze Zahl von 5 bis 900, und
- R: einen Rest gemäß Formel 2a, 2b, 2c, 3a, 3b oder 3c 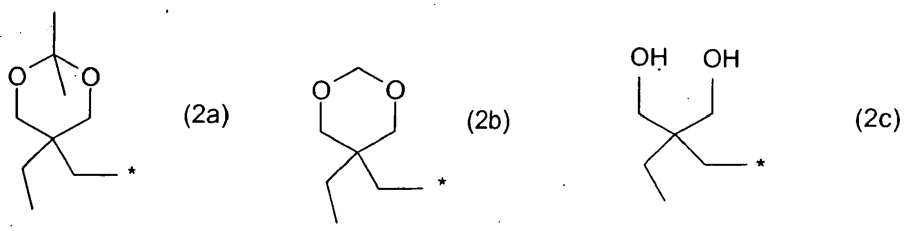 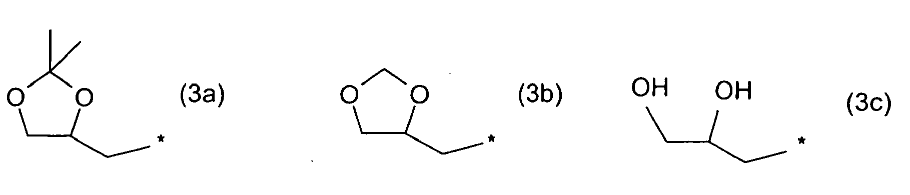 bedeuten, welcher über die mit * bezeichnete Valenz an das endständige Sauerstoffatom der Alkoxygruppe (A-O) in Formel 1 gebunden ist, und worin A nicht ausschließlich für C₃- oder C₄-Alkylen steht.

Ein weiterer Gegenstand der Erfindung sind wässrige Dispersionen, herstellbar durch die radikalische Polymerisation einer olefinisch ungesättigten Verbindung in Gegenwart einer Verbindung der Formel 1, indem die olefinisch ungesättigte Verbindung in Wasser mit der Verbindung der Formel 1 gemischt, und die Polymerisation durch Zugabe eines Radikalstarters ausgelöst wird.

Ein weiterer Gegenstand der Erfindung ist die Verwendung von Verbindungen der Formel 1 zur Herstellung von wässrigen Polymerdispersionen, indem olefinisch ungesättigte Verbindungen in Wasser mit Verbindungen der Formel 1 radikalisch polymerisiert werden. In gleicher Weise können die Verbindungen der Formel 1 zur Emulsionsstabilisierung in Emulsions- und Suspensionspolymerisationen verwendet werden. Besonders bevorzugt ist die Verwendung von Verbindungen der Formel 1 zur Herstellung von Polyurethandispersionen.

In der durch (A-O)ₘ wiedergegebenen Alkoxykette liegt die Gesamtzahl von Alkoxyeinheiten vorzugsweise zwischen 5 und 300, insbesondere zwischen 8 und 300. Bei der Alkoxykette kann es sich um eine Homopolymer- oder Blockpolymerkette handeln, die alternierende Blöcke verschiedener Alkoxyeinheiten aufweist. Es kann sich dabei auch um eine Kette mit statistischer Abfolge der Alkoxyeinheiten handeln. Die Alkoxyeinheiten sind vorzugsweise entweder nur Ethoxyeinheiten oder eine Mischung aus Ethoxy- und Propoxyeinheiten.

In einer bevorzugten Ausführungsform steht -(A-O)ₘ-R für eine Alkoxykette der Formel 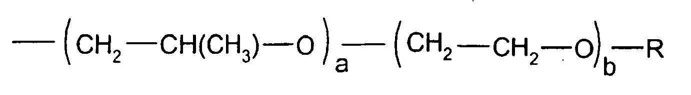 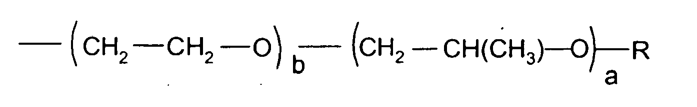 worin
- a: eine Zahl von 0 bis 300, vorzugsweise 0 bis 80
- b: eine Zahl von 5 bis 300, vorzugsweise 5 bis 200

In einer weiteren bevorzugten Ausführungsform steht -(A-O)ₘ- für einen Ethoxyrest mit 8 bis 300 Ethoxyeinheiten.

In einer weiteren bevorzugten Ausführungsform steht R für eine Glycerinketal oder Trimethylolpropanketal/acetalgruppe der Formeln 2a, 2b, 3a oder 3b.

Allen Ausführungsformen ist gemein, dass vorzugsweise mindestens 50 mol-% der Reste (A-O) Ethoxyreste sind, insbesondere sind 60 bis 100 mol-% Ethoxyreste.

Bevorzugte Gegenstände der Erfindung sind die Verbindungen der Formeln 4 und 5, die aus den Verbindungen der Formel 1 mit den Resten R gemäß Formel 2a, 2b und 3a, 3b durch hydrolytische Abspaltung der Ketal- oder Acetalgruppe hervorgehen. Die Symbole A und m haben die gleiche Bedeutung wie in Formel 1.

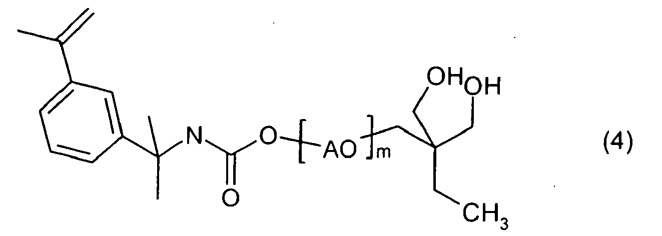

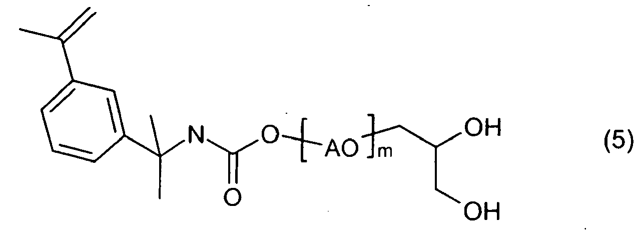

Die Verbindungen der Formeln 1, 4 und 5 werden im Folgenden auch als polymerisierbare Makromonomere bezeichnet.

Im Folgenden wird das Verfahren zur Herstellung der polymerisierbaren Makromonomere sowie exemplarische Anwendungen der erfindungsgemäßen Dispersionen näher beschrieben und an Beispielen erläutert.

Die polymerisierbaren Makromonomere werden aus Ω-Mono-hydroxyfunktionellen Polyalkylenglykolen, die in α-Stellung eine Alkoxy- oder Glycerylketal/ acetal oder Trimethylolpropanketal-/acetal -Gruppe enthalten durch stöchiometrische Umsetzung mit α,α-Dimethyl meta-Isopropenyl-Benzyl-Isocyanat (Formel 6) in Gegenwart von im Stand der Technik bekannten Katalysatoren für die Urethanbildung hergestellt. Im Falle der Diol-funktionalen Makromonomere gemäß Formel 4 und 5 schließt sich an den Schritt der Urethanbildung noch die hydrolytische Abspaltung der Ketal/Acetal-Gruppe aus der α-ständigen Glycerylketal-/acetal oder Trimethylolpropanketal-/acetal-Gruppe an ohne, dass dabei die Urethanbindung gespalten wird.

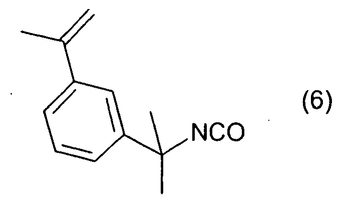

Der Grad der Wasserlöslichkeit, definiert durch den Trübungspunkt, der polymerisierbaren Makromonomere, sowie der Grad ihrer hydrophilierenden und dispergierenden Wirkung kann durch das Verhältnis und Anzahl der Alkylenoxideinheiten, vorzugsweise von Ethylenoxid zu Propylenoxid, eingestellt werden.

Die erfindungsgemäßen Makromonomere sind selbst nicht homopolymerisierbar, da die Ω-ständige α-Methyl-Styrylgruppe im Gegensatz zu Acryl- oder Methacrylestergruppen nicht zur Homopolymerisation in der Lage ist (vgl. B. Vollmert, Grundriss der Makromolekularen Chemie Band I S. 55). Damit sind die erfindungsgemäßen Makromonomeren lagerstabil.

Durch die radikalisch initiierte Copolymerisation der polymerisierbaren Makromonomere mit olefinisch ungesättigten Comonomeren entstehen die erfindungsgemäßen Copolymer-Dispersionen. Geeignete Monomere, die mit den Makromonomeren polymerisiert werden können, sind beispielsweise folgende:
- Vinylmonomere wie Carbonsäureester des Vinylalkohols, beispielsweise Vinylacetat, Vinylpropionat, Vinylether der Isononansäure oder der Isodecansäure, Styrol und Stilben,
- olefinisch ungesättigte Carbonsäureester, wie Ethylacrylat, n-Butylacrylat, i-Butylacrylat, Hexylacrylat, 2-Ethylhexylacrylat, Hydroxyethylacrylat sowie die entsprechenden Methacrylsäureester,
- olefinisch ungesättigte Carbonsäuren, wie Acrylsäure, Methacrylsäure und Itaconsäure und ihre Natrium-, Kalium- und Ammoniumsalze,
- olefinisch ungesättigte Sulfonsäuren und Phosphonsäuren und ihre Alkali-und Ammoniumsalze, wie Acrylamidomethylpropansulfonsäure und ihre Alkali-und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acylnitril, N-Methacrylamid, N-Ethylacrylamid, N-Propylacrylamid sowie die entsprechenden Methacylsäurederivate und Vinylmethylacetamid,
- Olefine, wie Ethylen, Propen und Buten, Penten, 1,3-Butadien und Chloropren,
- Vinylhalogenide, wie Vinylchlorid, Vinylidenchlorid und Vinylidenfluorid.

Im Falle der Diol-funktionalen Makromonomere gemäß Formel 4 und 5 kann diese beschriebene Copolymerisation auch erst nach dem Einbau der Makromonomere in ein Polyurethan durch Polykondensation der Makromonomere gemäß Formel 4 und 5 mit Isocyanaten wie z.B. Toluoldiisocyant und gegebenenfalls anderen bei der Polyurethanherstellung üblicherweise verwendeten Polyolen erfolgen.

Die vorliegende Erfindung bezieht sich ferner auf die Verwendung der oben definierten Makromonomere der Formeln 1, 4 und 5 zur Stabilisierung von Polymerdispersionen.

Die Verbindungen der Formeln 1, 4 und 5 werden dazu allein in Suspensions- oder Emulsionspolymerisationen oder bei der Herstellung von wässrigen Polyurethandispersionen als Emulgatoren verwendet, oder sie werden in Mischung mit anionischen und/oder nichtionischen Tensiden, die im Stand der Technik bekannt sind, eingesetzt.

Übliche anionische Tenside sind Natriumalkylsulfat, Natriumdodecylbenzolsulfonat, Natriumalkylsulfonat, Natrium- und Ammoniumalkylpolyethylenglykolethersulfate, Natrium- und Ammoniumalkylphenolpolyethylenglykolethersulfate sowie Alkylpolyethylenglykoletherphosphorsäuremono-, di- und triester und deren Mischungen, und Alkylphenolpolyethylenglykoletherphosphorsäuremono-, di- und triester und deren Mischungen.

Die erfindungsgemäßen Makromonomere sind, da die copolymerisierbare α-Methyl-Styrylgruppe über eine Urethanbindung an die Polyalkoxykette gebunden ist, im Gegensatz zu Acrylsäure- und Methacrylsäurebasierenden Makromonomeren sowohl vor als auch nach der Copolymerisation mit den anderen beschriebenen Comonomeren weitgehend hydrolysestabil. Dies ermöglicht einerseits die Lagerung der erfindungsgemäßen Makromonomere in wässriger Lösung, andererseits sind die aus den erfindungsgemäßen Makromonomeren hergestellten Polymerdispersionen auch in Gegenwart von Wasser bei höheren Temperaturen stabil und spalten nicht die Polyalkoxyseitenketten ab.

Folgende Beispiele verdeutlichen die Erfindung näher.

### Beispiel 1

250 g eines kommerziell verfügbaren α-Methoxy-Ω-hydroxy-polyethylenglykols mit Molmasse 500 g/mol (Hydroxylzahl 113 mg KOH/g) werden im Vakuum bei 80°C für 1 Stunde getrocknet. Anschließend wurde unter Stickstoff 0,25 g Zinndilaurat sowie 100,6 g α,α-Dimethyl meta-Isopropenyl-Benzyl-Isocyanat zugegeben und bei einer Temperatur von 120°C 5 Stunden gerührt. Nach Abkühlen auf 80°C wurden 7 g Wasser zugefügt und eine weitere Stunde gerührt. Anschließend wurde die Probe am Rotationsverdampfer im Vakuum getrocknet. Die Hydroxyzahl bestimmt nach DIN 53240 ging nach der Reaktion auf 2,3 mg KOH/g zurück. Die Jodzahl nach Kaufmann (Methode DGF C-V11b) lag bei 34,1 g Jod/100 g. Das Verhältnis der H-Atome wurde mittels ¹H-NMR untersucht. Die Probe wurde nach 8 Wochen Lagerung bei 70°C ohne Zugabe eines Stabilisators erneut geprüft. Es wurde weder Polymerisation noch Hydrolyse des Makromonomers gefunden.

Die mittels ¹H-NMR bestimmten Verhältnisse der funktionellen Gruppen vor und nach Lagerung sind in der Tabelle 1 wiedergegeben:

| funktionelle Gruppen | CH₃-O- | Vinylische H-Atome | OCH₂CH₂O | Phenyl H-Atome | CH₂O-CO-NH |
|---|---|---|---|---|---|
| Verhältnis der ¹H-Signale | 3,0 | 2 | 44 | 4,0 | 2,0 |
| Verhältnis der ¹H-Signale (nach 8 Wochen bei 70°C) | 3,1 | 2 | 44,9 | 4,0 | 1,98 |

### Beispiel 2

Das Vorgehen ist wie im Beispiel 1 mit der Ausnahme, dass anstelle des α-Methoxy-Ω-hydroxy-polyethylenglykols ein α-Dodecyl-Ω-hydroxy-polyethylenglykol (Dodecylalkoholethoxylat) mit einer Molmasse von 510 g/mol (Hydroxylzahl 110 mg KOH/g) eingesetzt wurde. Die Hydroxylzahl ging durch die Reaktion auf 2 mg KOH/g zurück. Die Probe wurde mittels ¹H-NMR untersucht. Die Probe wurde nach 8 Wochen Lagerung bei 70°C ohne Zugabe eines Stabilisators erneut geprüft. Es wurde weder Polymerisation noch Hydrolyse des Makromonomers gefunden. Die mittels ¹H-NMR bestimmten Verhältnisse der funktionellen Gruppen sind in der Tabelle 2 wiedergegeben:

| funktionelle Gruppen | CH₃(CH₂)₁₁-O- | Vinylische H-Atome | OCH₂CH₂O | Phenyl H-Atome | CH₂O-CO-NH |
|---|---|---|---|---|---|
| Verhältnis der ¹H-Signale | 24 | 2 | 28 | 4,0 | 2,0 |
| Verhältnis der ¹H-Signale (nach 8 Wochen bei 70°C) | 24,5 | 2 | 29 | 4,0 | 1,96 |

### Beispiel 3

Das Vorgehen ist wie in Beispiel 1 mit der Ausnahme, dass an Stelle des kommerziell verfügbaren α-Methoxy-Ω-hydroxy-polyethylenglykols mit Molmasse 500 g/mol nun 287,6 g eines kommerziell verfügbaren α-Methoxy-Ω-hydroxypolyethylenglykols mit Molmasse 4796 g/mol (Hydroxylzahl 11,7 mg KOH/g) eingesetzt wurden, und dass die Menge an α,α-Dimethyl meta-Isopropenyl-Benzyl-Isocyanat auf 12,1 g verringert wurde, um equimolare Mengen einzusetzen. Die Probe wurde mittels ¹H-NMR untersucht. Die Hydroxylzahl lag nach der Umsetzung bei 1,5 mg KOH/g. Die Jodzahl lag bei 5,3 g Jod/100 g.
Die Probe wurde nach 8 Wochen Lagerung bei 70°C ohne Zugabe eines Stabilisators erneut geprüft. Es wurde weder Polymerisation noch Hydrolyse des Makromonomers gefunden.

Die mittels ¹H-NMR bestimmten Verhältnisse der funktionellen Gruppen vor und nach Lagerung sind in der Tabelle 3 wiedergegeben:

| funktionelle Gruppen | CH₃-O- | Vinylische H-Atome | OCH₂CH₂O | Phenyl-H-Atome | CH₂O-CO-NH |
|---|---|---|---|---|---|
| Verhältnis der ¹H-Signale | 3,0 | 2,2 | 452 | 4,3 | 2,2 |
| Verhältnis der ¹H-Signale (nach 8 Wochen bei 70 °C ) | 3,1 | 2,1 | 462 | 4,3 | 2,1 |

### Beispiel 4

Das Vorgehen ist wie in Beispiel 1 mit der Ausnahme, dass an Stelle des kommerziell verfügbaren α-Methoxy-Ω-hydroxy-polyethylenglykols mit Molmasse 500 g/mol nun 279,1 g eines α-Methoxy-Ω-hydroxy-polypropylenglykol-polyethylenglykolblockcopolymers mit Molmasse 1396 g/mol (Hydroxylzahl 40,2 mg KOH/g) und folgender Struktur

CH₃-O-(CH₂CHCH₃-O)₅-(CH₂CH₂O)₂₅OH

eingesetzt wurde, und dass die Menge an α,α-Dimethyl meta-Isopropenyl-Benzyl-Isocyanat auf 40,24 g angepasst wurde, um equimolare Mengen einzusetzen. Die Probe wurde mittels ¹H-NMR untersucht. Die Hydroxylzahl lag nach der Umsetzung bei 1,9 mg KOH/g, die Jodzahl lag bei 14,8 g Jod/100 g. Dies entspricht einer Molmasse von 1709 g/mol pro Doppelbindung. Das Produkt weist in Wasser einen Trübungspunkt von 28°C auf.

Die Probe wurde nach 8 Wochen Lagerung bei 70°C ohne Zugabe eines Stabilisators erneut geprüft. Es wurde weder Polymerisation noch Hydrolyse des Makromonomers gefunden.

Die mittels ¹H-NMR bestimmten Verhältnisse der funktionellen Gruppen vor und nach Lagerung sind in der Tabelle 4 wiedergegeben:

| funktionelle Gruppen | Vinylische H-Atome | OCH₂CHCH₃O | OCH₂CH₂O | Phenyl-H-Atome | CH₂O-CO-NH |
|---|---|---|---|---|---|
| Verhältnis der ¹H-Signale *) | 2,0 | 15 | 104 | 4,0 | 2,0 |
| Verhältnis der ¹H-Signale (nach 8 Wochen bei 70°C) | 1,9 | 15,4 | 106 | 4,1 | 2,0 |

| | | | | | |
|---|---|---|---|---|---|
| *) Dies entspricht einer Molmasse von 1635 g/mol und liegt in guter Übereinstimmung mit den theoretisch zu erwartenden Wert (1600 g/mol) und dem mittels Jodzahl ermittelten Wert (1709 g/mol). | | | | | |

### Beispiel 5

Das Vorgehen ist wie in Beispiel 1 mit der Ausnahme, dass an Stelle des kommerziell verfügbaren α-Methoxy-Ω-hydroxy-polyethylenglykols mit Molmasse 500 g/mol nun 336,25 g eines α-(1 ,2-O-Isopropylidenglycerin)-Ω-hydroxy-polyethylenglykols mit einer Molmasse von 1345 g/mol (Hydroxylzahl 41,7 mg KOH/g) und folgender Struktur 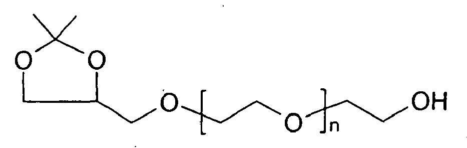 mit n = 27 eingesetzt wurde, und dass die Menge an α,α-Dimethyl meta-Isopropenyl-Benzyl-Isocyanat auf 50,25 g angepasst wurde, um equimolare Mengen einzusetzen. Die Probe wurde mittels ¹H-NMR untersucht. Die Hydroxylzahl lag nach der Umsetzung bei 2,1 mg KOH/g.

Die Probe wurde nach 8 Wochen Lagerung bei 70°C ohne Zugabe eines Stabilisators erneut geprüft. Es wurde weder Polymerisation noch Hydrolyse des Makromonomers gefunden.

Die mittels ¹H-NMR bestimmten Verhältnisse der funktionellen Gruppen vor und nach Lagerung sind in der Tabelle 5 wiedergegeben:

| funktionelle Gruppen | Vinylische H-Atome | Isopropyliden-CH₃ | OCH₂CH₂O | Phenyl-H-Atome | CH₂O-CO-NH |
|---|---|---|---|---|---|
| Verhältnis der ¹H-Signale | 2,0 | 6,1 | 112 | 4,1 | 2,1 |
| Verhältnis der ¹H-Signale (nach 8 Wochen bei 70°C) | 1,9 | 6,0 | 110 | 4,1 | 2,0 |

### Beispiel 6

### Spaltung des Ketals:

100 g des Reaktionsprodukts aus Beispiel 6 wurden mit 35 g Wasser und 2 g Phosphorsäure gelöst und bei 80°C für zwei Stunden gerührt. Anschließend wurde im Vakuum das Gemisch entwässert, das Produkt mit verdünnter Natronlauge auf pH 6-7 neutralisiert, erneut im Vakuum entwässert und filtriert.

Das resultierende Produkt wies in Übereinstimmung mit folgender Struktur eine OH-Zahl von 86 mg KOH/g und eine Jodzahl von 17,4 g Jod/100 g auf: 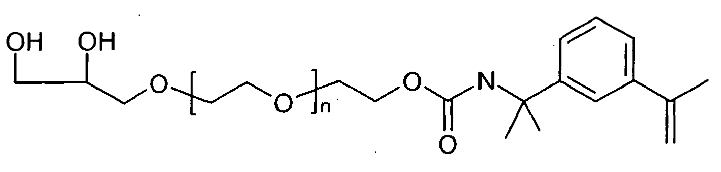 mit n = 23

## Patentansprüche

1. Verbindungen der Formel 1 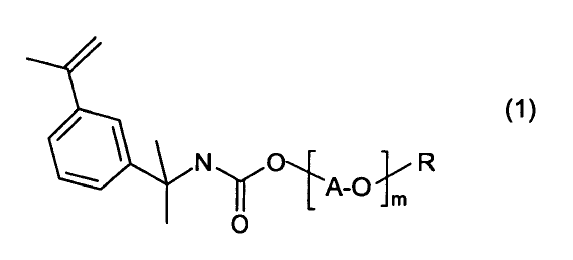 worin
A C₂-C₄-Alkylen
m eine ganze Zahl von 5 bis 900, und
R einen Rest gemäß Formel 2a, 2b, 2c, 3a, 3b oder 3c 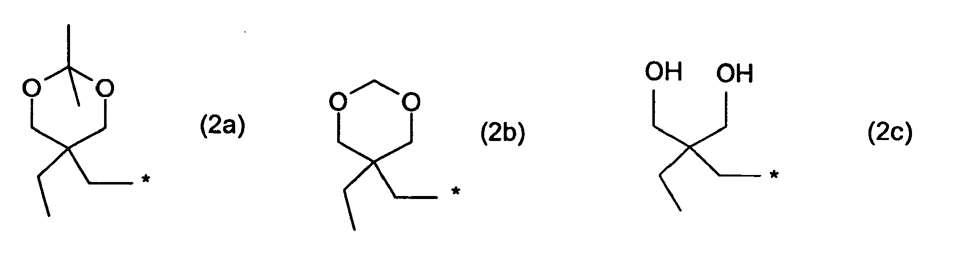 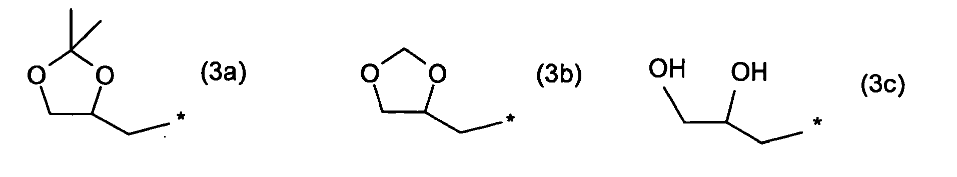
bedeuten, welcher über die mit * bezeichnete Valenz an das endständige Sauerstoffatom der Alkoxygruppe (A-O) in Formel 1 gebunden ist, und worin A nicht ausschließlich für C₃- oder C₄-Alkylen steht.

2. Verbindungen der Formel 4 gemäß Anspruch 1, 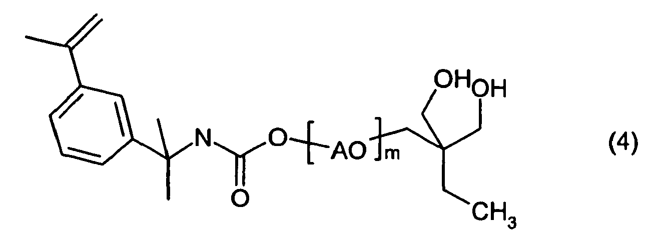 worin A für eine C₂- bis C₄-Alkylengruppe und m für eine ganze Zahl von 5 bis 900 steht, mit der Maßgabe, dass A nicht ausschließlich für C₃- oder C₄-Alkylen steht.

3. Verbindungen der Formel 5 gemäß Anspruch 1, 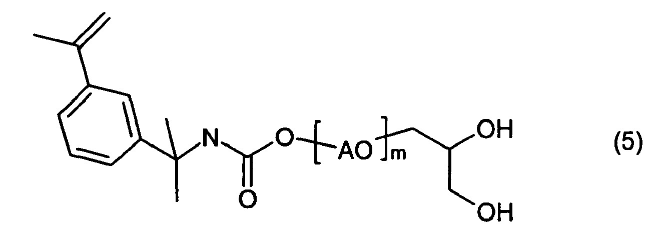 worin A für eine C₂- bis C₄-Alkylengruppe und m für eine ganze Zahl von 5 bis 900 steht, mit der Maßgabe, dass A nicht ausschließlich für C₃- oder C₄-Alkylen steht.

4. Verbindungen nach einem oder mehreren der Ansprüche 1 bis 3, worin mindestens 50 mol-% der Einheiten -(A-O)ₘ- Ethoxyeinheiten sind.

5. Wässrige Dispersionen, herstellbar durch die radikalische Polymerisation einer olefinisch ungesättigten Verbindung in Gegenwart einer Verbindung der Formel 1, 4 oder 5, indem die olefinisch ungesättigte Verbindung in Wasser mit der Verbindung der Formel 1, 4 oder 5 gemischt, und die Polymerisation durch Zugabe eines Radikalstarters ausgelöst wird.

6. Wässrige Dispersionen gemäß Anspruch 5, **dadurch gekennzeichnet, dass** die Verbindung gemäß Formel 1, 4 oder 5 einen Trübungspunkt in Wasser von mindestens 20°C aufweist.

7. Wässrige Dispersionen gemäß Anspruch 5 und/oder 6, worin R für Ketal von Glycerin oder Trimethylolpropan steht.

8. Wässrige Dispersionen gemäß Anspruch 5 und/oder 6, worin R für 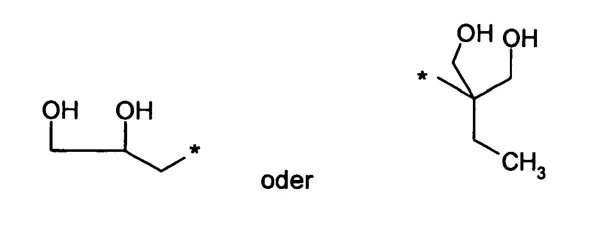 steht, und die Bindung an die Alkoxygruppe (A-O) in Formel 1, 4 oder 5 über die mit * **gekennzeichnet**e Valenz erfolgt.

9. Wässrige Dispersionen gemäß einem oder mehreren der Ansprüche 5 bis 8, worin -(A-O)ₘ- für eine gemischte Alkoxygruppe mit mindestens 50 mol-% Ethoxygruppen steht.

10. Wässrige Dispersionen gemäß einem oder mehreren der Ansprüche 5 bis 9, worin -(A-O)ₘ- für ein Alkylenoxidblockpolymer der Formel 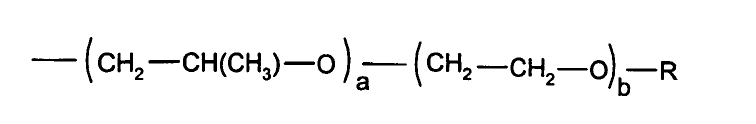 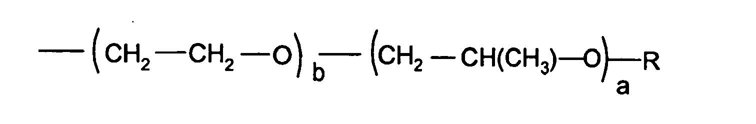 worin
a eine Zahl von 0 bis 300, vorzugsweise 0 bis 80
b eine Zahl von 5 bis 300, vorzugsweise 5 bis 200
steht.

11. Wässrige Dispersionen gemäß einem oder mehreren der Ansprüche 5 bis 9, worin -(A-O)ₘ- für eine Ethoxykette mit 8 bis 240 Ethoxyeinheiten steht.

12. Verwendung von Verbindungen gemäß Formel 1 zur Herstellung von wässrigen Polymerdispersionen, indem olefinisch ungesättigte Verbindungen in Wasser mit Verbindungen der Formel 1, 4 oder 5 radikalisch polymerisiert werden.

13. Verwendung von Verbindungen gemäß Formel 1, 4 oder 5 als Additiv zur Emulsionsstabilisierung in Emulsions- oder Suspensionspolymerisationen.

14. Verwendung der Verbindungen gemäß Formel 1, 4 oder 5 zur Herstellung von wässrigen Polyurethandispersionen.

## Claims

1. A compound of the formula 1 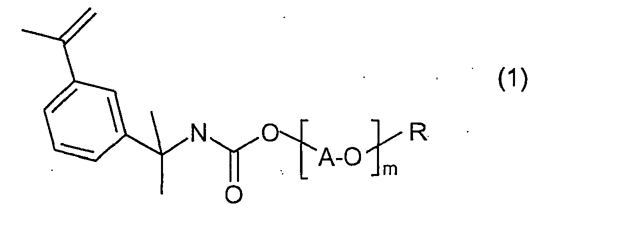 in which
A is C₂-C₄-alkylene
m is an integer from 5 to 900, and
R is a radical according to formula 2a, 2b, 2c, 3a, 3b or 3c 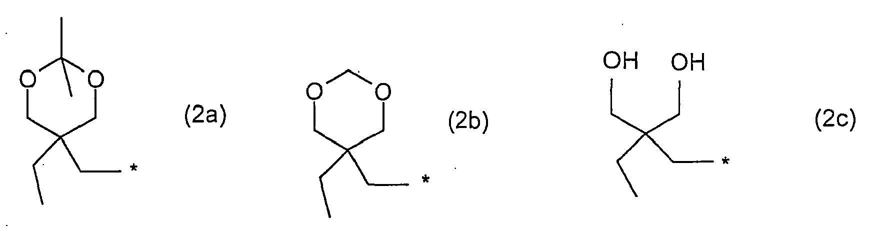 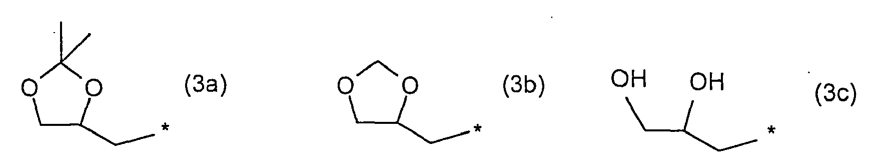
which is bonded to the terminal oxygen atom of the alkoxy group (A-O) in formula 1 via the valence denoted by *, and in which A is not exclusively C₃- or C₄-alkylene.

2. A compound of the formula 4 as claimed in claim 1 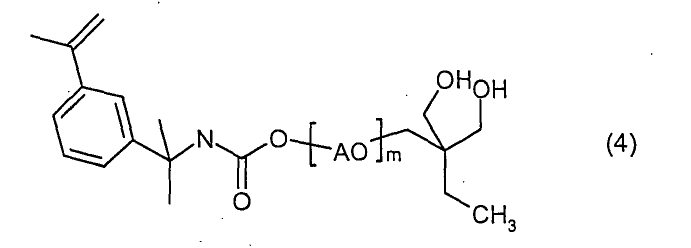 in which A is a C₂-C₄-alkylene group and m is an integer from 5 to 900, with the proviso that A is not exclusively C₃- or C₄-alkylene.

3. A compound of the formula 5 as claimed in claim 1 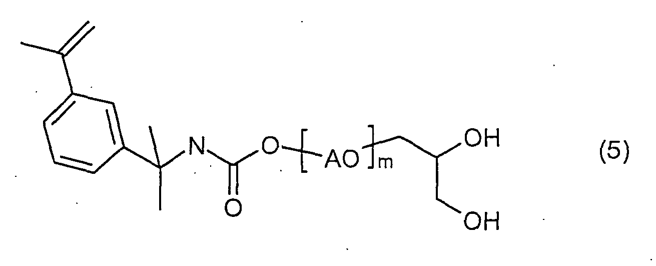 in which A is a C₂-C₄-alkylene group and m is an integer from 5 to 900, with the proviso that A is not exclusively C₃- or C₄-alkylene.

4. A compound as claimed in one or more of claims 1 to 3, in which at least 50 mol% of the units -(A-O)ₘ- are ethoxy units.

5. An aqueous dispersion preparable by the free-radical polymerization of an olefinically unsaturated compound in the presence of a compound of the formula 1, 4 or 5 by mixing the olefinically unsaturated compound in water with the compound of the formula 1, 4 or 5, and triggering the polymerization by adding a free-radical initiator.

6. The aqueous dispersion as claimed in claim 5, wherein the compound according to formula 1, 4 or 5 has a cloud point in water of at least 20°C.

7. The aqueous dispersion as claimed in claim 5 and/or 6, in which R is ketal of glycerol or trimethylolpropane.

8. The aqueous dispersion as claimed in claim 5 and/or 6, in which R is 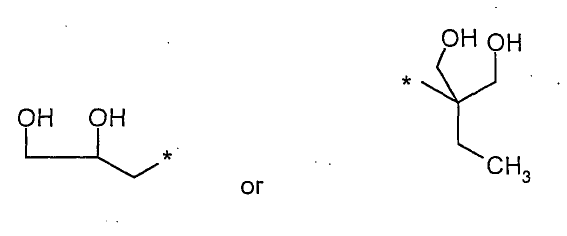 and the bond to the alkoxy group (A-O) in formula 1, 4 or 5 takes place via the valence denoted by *.

9. The aqueous dispersion as claimed in one or more of claims 5 to 8, in which -(A-O)ₘ- is a mixed alkoxy group with at least 50 mol% of ethoxy groups.

10. The aqueous dispersion as claimed in one or more of claims 5 to 9, in which -(A-O)ₘ- is an alkylene oxide block polymer of the formula 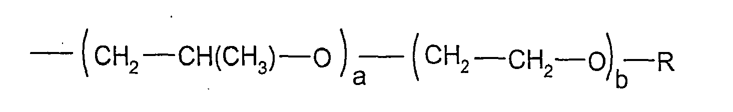 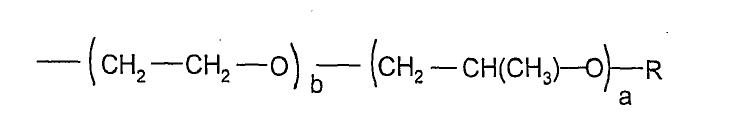 in which
a is a number from 0 to 300, preferably 0 to 80
b is a number from 5 to 300, preferably 5 to 200.

11. The aqueous dispersion as claimed in one or more of claims 5 to 9, in which -(A-O)ₘ- is an ethoxy chain with 8 to 240 ethoxy units.

12. The use of compounds according to formula 1 for preparing aqueous polymer dispersions by free-radically polymerizing olefinically unsaturated compounds in water with compounds of the formula 1, 4 or 5.

13. The use of compounds according to formula 1, 4 or 5 as additive for emulsion stabilization in emulsion or suspension polymerizations.

14. The use of the compounds according to formula 1, 4 or 5 for preparing aqueous polyurethane dispersions.

## Revendications

1. Composés de formule 1 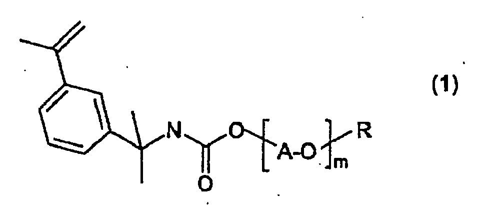 dans laquelle
A représente un groupe alkylène en C₂-C₄,
m représente un nombre entier allant de 5 à 900, et
R représente un radical de formule 2a, 2b, 2c, 3a, 3b ou 3c 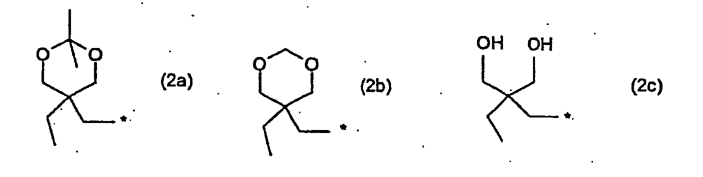 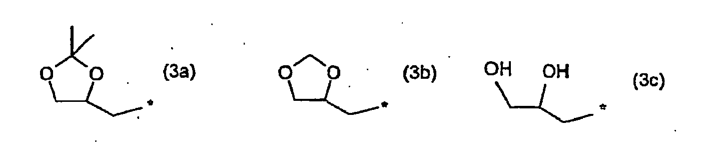
qui est lié par la valence désignée par * à l'atome d'oxygène en bout de chaîne du groupe alcoxy (A-O) dans la formule 1, et dans laquelle A représente non exclusivement un groupe alkylène en C₃ ou C₄.

2. Composé de formule 4 selon la revendication 1, 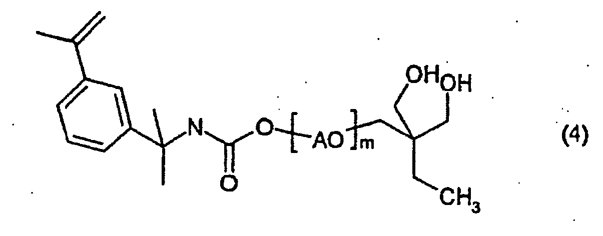 dans laquelle A représente un groupe alkylène en C₂-C₄ et m représente un nombre entier allant de 5 à 900, étant entendu que A ne représente pas exclusivement un groupe alkylène et C₃ ou C₄.

3. Composé de formule 5 selon la revendication 1, 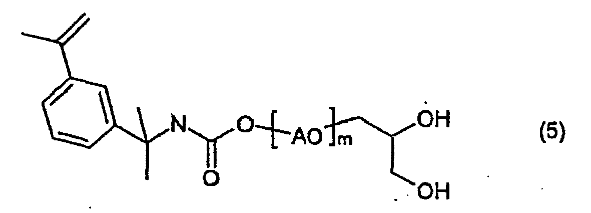 dans laquelle A représente un groupe alkylène en C₂-C₄ et m représente un nombre entier allant de 5 à 900, étant entendu que A ne représente pas exclusivement un groupe alkylène et C₃ ou C₄.

4. Composés selon une ou plusieurs des revendications 1 à 3, dans lesquels au moins 50 % en moles des motifs -(A-O)ₘ sont des groupes éthoxy.

5. Dispersions aqueuses, pouvant être préparées par la polymérisation radicalaire d'un composé à insaturation oléfinique en présence d'un composé de formule 1, 4 ou 5, par mélange du composé à insaturation oléfinique, dans de l'eau, avec le composé de formule 1, 4 ou 5, et déclenchement de la polymérisation par addition d'un amorceur de radicaux.

6. Dispersions aqueuses selon la revendication 5, **caractérisées en ce que** le composé selon la formule 1, 4 ou 5 présente dans l'eau un point de trouble d'au moins 20 °C.

7. Dispersions aqueuses selon la revendication 5 et/ou la revendication 6, dans lesquelles R représente un cétal de glycérol ou de triméthylolpropane.

8. Dispersions aqueuses selon la revendication 5 et/ou la revendication 6, dans lesquelles R représente 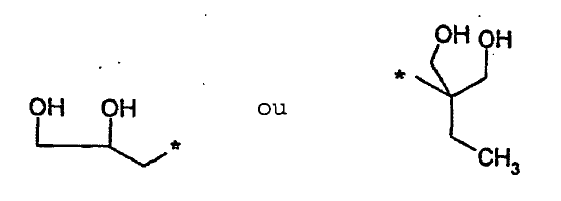 et la liaison au groupe alcoxy (A-O) dans la formule 1, 4 ou 5 s'effectue par la valence désignée par *.

9. Dispersions aqueuses selon une ou plusieurs des revendications 5 à 8, dans lesquelles -(A-O)ₘ-représente un groupe alcoxy mixte comportant au moins 50 % en moles de groupes éthoxy.

10. Dispersions aqueuses selon une ou plusieurs des revendications 5 à 9, dans lesquelles -(A-O)ₘ-représente un polymère séquencé d'oxyde d'alkylène de formule 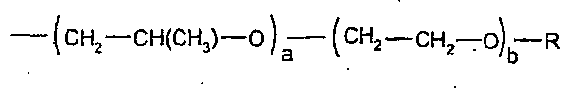 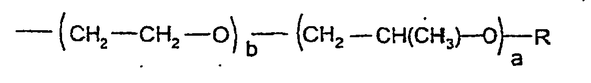 dans laquelle
a représente un nombre allant de 0 à 300, de préférence de 0 à 80,
b représente un nombre allant de 5 à 300, de préférence de 5 à 200.

11. Dispersions aqueuses selon une ou plusieurs des revendications 5 à 9, dans lesquelles -(A-O)ₘ-représente une chaîne éthoxy comportant de 8 à 240 groupes éthoxy.

12. Utilisation de composés de formule 1 pour la préparation de dispersions aqueuses de polymères par polymérisation radicalaire de composés à insaturation oléfinique dans de l'au, avec des composés de formule 1, 4 ou 5.

13. Utilisation de composés de formule 1, 4 ou 5, en tant qu'additif pour la stabilisation d'émulsions dans des polymérisations en émulsion ou en suspension.

14. Utilisation des composés de formule 1, 4 ou 5, pour la préparation de dispersions aqueuses de polyuréthanne.
